# EUROPEAN PATENT APPLICATION

(11) **EP 4 365 972 A1**
(43) Date of publication of application: **08.05.2024**
(21) Application number: 22832638.5
(22) Date of filing: 18.05.2022
(51) Int. Cl.: H01M 4/13, H01M 4/505, H01M 4/525

(54) **POSITIVE ELECTRODE FOR NONAQUEOUS ELECTROLYTE SECONDARY BATTERIES, AND NONAQUEOUS ELECTROLYTE SECONDARY BATTERY**

(30) Priority: 30.06.2021 JP 2021108928
(71) Applicant: Panasonic Intellectual Property Management Co., Ltd., Osaka-shi, Osaka 540-6207 (JP)
(72) Inventor: SAITO, Motoharu, Kadoma-shi, Osaka 571-0057 (JP); KOKUBU, Takao, Kadoma-shi, Osaka 571-0057 (JP); OGASAWARA, Takeshi, Kadoma-shi, Osaka 571-0057 (JP)
(74) Representative: Novagraaf International SA
(86) International application number: PCT/JP2022/020613
(87) International publication number: WO 2023/276479

(57) **Abstract**

Provided is a positive electrode for a nonaqueous electrolyte secondary battery of one embodiment, wherein a positive electrode active substance is constituted of single particles having no grain boundary therein. The single particles include first single particles having a particle diameter of at least 4 µm, and second single particles having a particle diameter smaller than that of the first single particles. In a positive electrode mixture layer, the second single particles are disposed around the first single particles. The second single particle, among the second single particles disposed adjacent to the first single particles, with the smallest particle diameter has a particle diameter that is no more than 1/5 of the particle diameter of the first single particle adjacent to said second single particle. The first single particles account for 3-30% relative to the total number of the particles in the positive electrode active substance.

## Description

### TECHNICAL FIELD

The present disclosure relates to a positive electrode for a non-aqueous electrolyte secondary battery and a non-aqueous electrolyte secondary battery using the positive electrode.

### BACKGROUND ART

In a non-aqueous electrolyte secondary battery such as a lithium-ion battery, a positive electrode active material, which constitutes a positive electrode, significantly affects battery performance such as input and output characteristics, a capacity, and durability. For the positive electrode active material, a lithium-transition metal composite oxide containing a metal element such as Ni, Co, Mn, and Al, and composed of secondary particles formed by aggregation of primary particles is commonly used. Since the positive electrode active materials have largely different properties depending on their compositions, particle shapes, and the like, there have been many investigations on various positive electrode active materials.

For example, Patent Literature 1 discloses a positive electrode active material including a lithium-nickel composite oxide having a hexagonal layered structure and composed of: single primary particles; or single primary particles and secondary particles formed by aggregation of a plurality of primary particles. This positive electrode active material has a predetermined composition and an X-ray diffraction pattern, and is composed of particles having a circularity of greater than or equal to 0.93 and less than or equal to 1.00. Patent Literature 1 describes an effect that using the positive electrode active material improves cycle characteristics of a battery.

### CITATION LIST

### PATENT LITERATURE

PATENT LITERATURE 1: International Publication No. 2021-04033

### SUMMARY

### TECHNICAL PROBLEM

In a non-aqueous electrolyte secondary battery, it is an important challenge to inhibit a decrease in a capacity with charge and discharge to improve durability. The art disclosed in Patent Literature 1 still has a room for improvement of the durability of the battery.

### SOLUTION TO PROBLEM

A positive electrode for a non-aqueous electrolyte secondary battery of an aspect of the present disclosure is a non-aqueous electrolyte secondary battery comprising: a positive electrode core; and a positive electrode mixture layer provided on the positive electrode core and including a positive electrode active material, wherein the positive electrode active material is composed of single particles having no grain boundary in the particle, the single particles include: first single particles having a particle diameter of greater than or equal to 4 µm; and second single particles having a smaller particle diameter than the first single particles and being adjacent to the first single particles, a particle having a smallest particle diameter among the second single particles has a particle diameter of less than or equal to 1/5 of a particle diameter of the adjacent first single particle, and a content of the first single particles is greater than or equal to 3% and less than or equal to 30% relative to a total number of particles of the positive electrode active material.

A non-aqueous electrolyte secondary battery of an aspect of the present disclosure comprises: the above positive electrode; a negative electrode; and a non-aqueous electrolyte.

### ADVANTAGEOUS EFFECT OF INVENTION

According to the positive electrode according to the present disclosure, the durability of the non-aqueous electrolyte secondary battery may be improved. The non-aqueous electrolyte secondary battery using the positive electrode according to the present disclosure has, for example, a high capacity retention after a charge-discharge cycle and excellent cycle characteristics.

### BRIEF DESCRIPTION OF DRAWING

FIG. 1 is a sectional view of a non-aqueous electrolyte secondary battery of an example of an embodiment.
FIG. 2 is a view schematically illustrating a cross section of a positive electrode mixture layer of an example of an embodiment.
FIG. 3 is a scanning electron microscope (SEM) image of a cross section of a positive electrode mixture layer of an example of an embodiment.
FIG. 4 is a graph indicating changes in capacity retentions with charge-discharge cycle of non-aqueous electrolyte secondary batteries of Examples and Comparative Example.

### DESCRIPTION OF EMBODIMENTS

As noted above, it is an important challenge to inhibit a decrease in a capacity with charge and discharge of a battery to improve durability. The present inventors have made intensive investigation to develop a positive electrode that contributes to improvement of durability of a non-aqueous electrolyte secondary battery, and consequently found that the durability of the battery is remarkably improved by using a positive electrode having a positive electrode mixture layer containing positive electrode active material particles composed of single particles having no grain boundary in the particle and in which second single particles having a small particle diameter are disposed around a first single particle having a large particle diameter. When a smallest second single particle has a particle diameter of less than or equal to 1/5 of a particle diameter of the adjacent first single particle, the effect of improving the durability is remarkably exhibited.

A content of the first single particles is preferably greater than or equal to 3% and less than or equal to 30% relative to a total number of particles of the positive electrode active material. In this case, the effect of improving the durability becomes more remarkable. In addition, using the positive electrode according to the present disclosure may improve the durability while keeping high discharge capacity, for example.

Hereinafter, an example of an embodiment of the positive electrode active material for a non-aqueous electrolyte secondary battery and a non-aqueous electrolyte secondary battery using the positive electrode active material according to the present disclosure will be described in detail with reference to the drawings. The present disclosure includes constitution of selectively combining a plurality of embodiments and modified examples described hereinafter.

Hereinafter, a cylindrical battery in which a wound electrode assembly 14 is housed in a bottomed cylindrical exterior housing can 16 will be exemplified, but the exterior of the battery is not limited to a cylindrical exterior housing can, and may be, for example, a rectangular exterior housing can (rectangular battery), a coin-shaped exterior housing can (coin battery), or an exterior constituted with laminated sheets including a metal layer and a resin layer (laminate battery). The electrode assembly may be a stacked electrode assembly in which a plurality of positive electrodes and a plurality of negative electrodes are alternately stacked with a separator interposed therebetween.

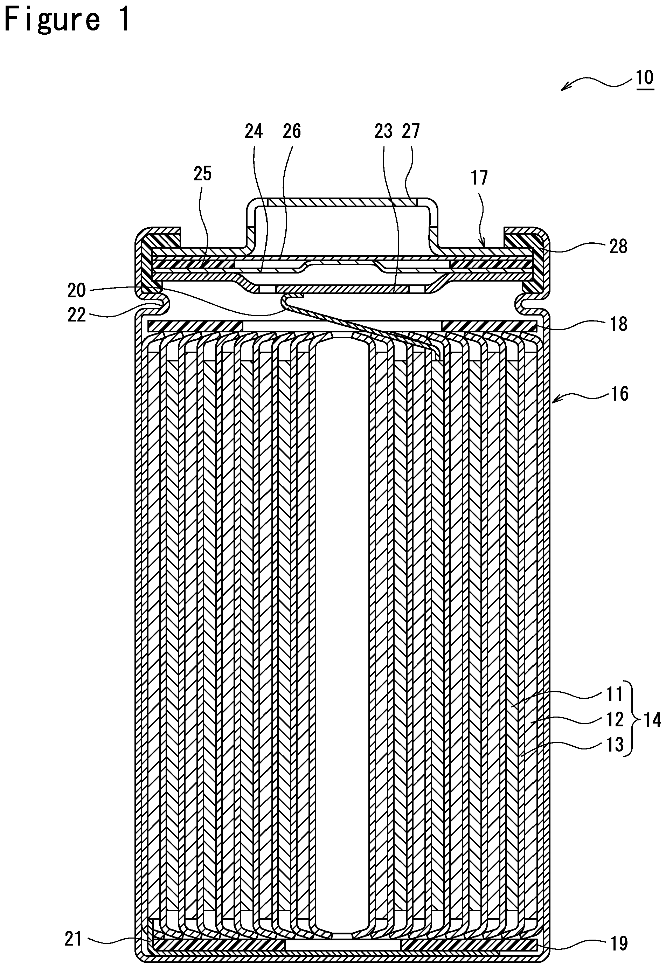

FIG. 1 is a sectional view of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening on one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, and a mixed solvent of two or more thereof, and the like are used, for example. The non-aqueous solvent may contain a halogen-substituted derivative in which hydrogen of these solvents is at least partially substituted with a halogen atom such as fluorine. An example of the non-aqueous solvent is ethylene carbonate (EC), ethyl methyl carbonate (EMC), dimethyl carbonate (DMC), a mixed solvent thereof, or the like. For the electrolyte salt, a lithium salt such as LiPF₆ is used, for example. The non-aqueous electrolyte is not limited to a liquid electrolyte, and may be a solid electrolyte.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed one size larger than the positive electrode 11. That is, the negative electrode 12 is formed longer than the positive electrode 11 in a longitudinal direction and in a width direction (short direction). The separators 13 are formed to be one size larger than at least the positive electrode 11, and two of them are disposed so as to sandwich the positive electrode 11, for example. Typically, a positive electrode lead 20 is connected to the positive electrode 11 of the electrode assembly 14 by welding or the like, and a negative electrode lead 21 is connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17, and thereby sealing inside the battery and insulation between the exterior housing can 16 and the sealing assembly 17 are ensured. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper surface thereof. The sealing assembly 17 is fixed on the upper part of the exterior housing can 16 with the grooved portion 22 and with an end of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure of the battery increases due to abnormality in the battery, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, which constitute the electrode assembly 14, specifically constitution of a positive electrode active material and a positive electrode mixture layer which constitute the positive electrode 11, will be described in detail.

### [Positive Electrode]

The positive electrode 11 has a positive electrode core and a positive electrode mixture layer provided on a surface of the positive electrode core. The positive electrode core is a sheet-shaped current collector having higher conductivity than the positive electrode mixture layer. For the positive electrode core, a foil of a metal stable within a potential range of the positive electrode 11, such as aluminum and an aluminum alloy, a film in which such a metal is disposed on a surface layer thereof, and the like may be used. The positive electrode mixture layer includes a positive electrode active material, a binder, and a conductive agent, and is preferably provided on both surfaces of the positive electrode core. A thickness of the positive electrode mixture layer is larger than that of the positive electrode core, and as an example, greater than or equal to 50 µm and less than or equal to 150 µm on one side of the core.

An example of the binder included in the positive electrode mixture layer is a fluororesin such as polytetrafluoroethylene (PTFE) or polyvinylidene fluoride (PVdF), polyacrylonitrile (PAN), a polyimide resin, an acrylic resin, or a polyolefin resin. The positive electrode mixture layer preferably further includes a cellulose derivative such as carboxymethylcellulose (CMC) or a salt thereof, polyethylene oxide (PEO), and the like. Examples of the conductive agent included in the positive electrode mixture layer include carbon materials such as carbon black, acetylene black, Ketjenblack, and graphite.

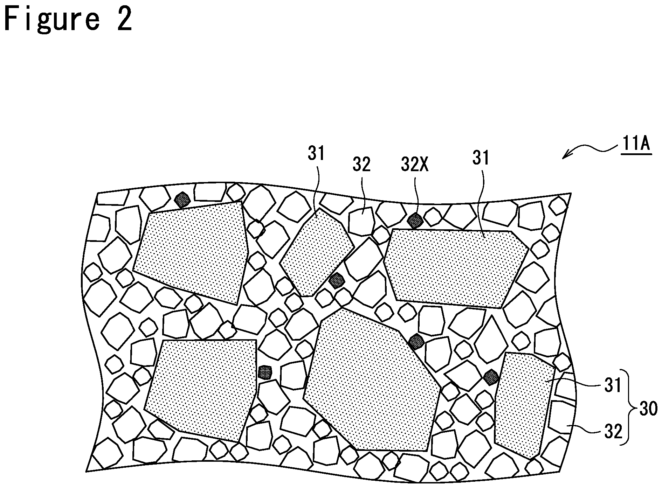

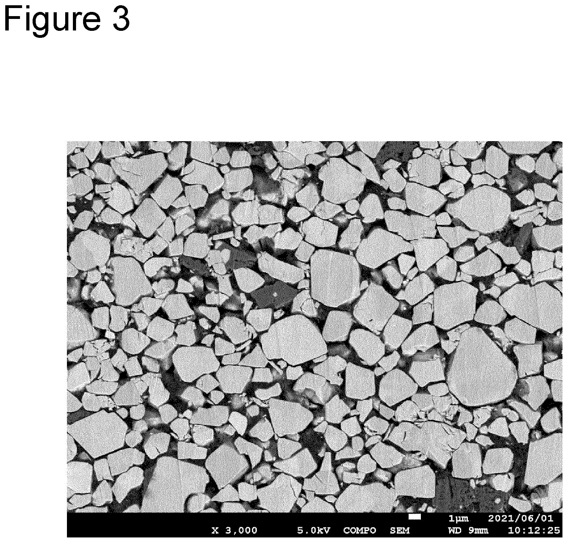

FIG. 2 is a schematic view illustrating a cross section of a positive electrode mixture layer 11A of an example of an embodiment, and FIG. 3 is a sectional SEM image of the positive electrode mixture layer 11A. In FIG. 2, first single particles 31 are hatched with dots at low density, and a particle 32X having a smallest particle diameter among second single particles 32 adjacent to the first single particle 31 is hatched with dots at high density.

As illustrated in FIG. 2 and FIG. 3, a positive electrode active material 30 is composed of single particles, and the single particles include: the first single particles 31 being large particles having a particle diameter of greater than or equal to 4 µm; and the second single particles 32 having a smaller particle diameter than the first single particles 31. Although a detail will be described later, the second single particles 32 are present around the first single particle 31, and the particle 32X having a smallest particle diameter among the second single particles 32 adjacent to the first single particle 31 has a particle diameter of less than or equal to 1/5 of a particle diameter of the adjacent first single particle 31.

Although the first single particles 31 and the second single particles 32 preferably have no grain boundary inside the particle, they may have less than or equal to five of crystal planes in the single particle. In the present embodiment, the positive electrode active material 30 is composed of substantially only the first single particles 31 and the second single particles 32, but the positive electrode mixture layer 11A may include particles other than the single particles, for example secondary particles formed by aggregation of many primary particles. A content of the single particles in the positive electrode active material 30 is preferably greater than or equal to 50%, more preferably greater than or equal to 70%, and particularly preferably greater than or equal to 80% on a number basis.

The single particle is not a single crystal, and may be an aggregate including less than or equal to five of crystal planes in a primary particle, and gaps on particle boundaries in the particle is at most 1%. The crystal plane may be determined by difference in contrast when cross sections of the particles are observed with a scanning ion microscope (SIM) with a magnification of 3000.

Although a small amount of the first single particles 31 included in the positive electrode mixture layer 11A improves the durability of the battery, the first single particles 31 are preferably included at greater than or equal to 3% relative to a total number of particles of the positive electrode active material 30. In this case, the effect of improving the durability becomes more remarkable. A content of the first single particles 31 is preferably less than or equal to 30%, and more preferably less than or equal to 25% relative to the total number of particles of the positive electrode active material 30. An example of preferable contents of the first single particles 31 is greater than or equal to 3% and less than or equal to 30%, or greater than or equal to 5% and less than or equal to 25% on a number basis. A content of the second single particles 32 is, for example, greater than or equal to 70% and less than or equal to 97% on a number basis. When the contents of the first single particles 31 and second single particles 32 are within the above ranges, the durability of the battery may be more effectively improved.

The first single particles 31 and the second single particles 32 are composed of, for example, a lithium-transition metal composite oxide containing at least one metal element in an amount of greater than or equal to 90 mol% relative to a total molar amount of metal elements excluding Li, the at least one metal element selected from the group consisting of Ni, Mn, Fe, and Al. This lithium-transition metal composite oxide may contain elements other than Li, Ni, Mn, Fe, and Al at an amount of less than or equal to 10 mol% relative to a total molar amount of elements excluding Li and O. Examples of the other elements include Co, B, Mg, Ti, V, Cr, Cu, Zn, Ga, Sr, Zr, Nb, In, Sn, Ta, W, Si, and Ca, and the other elements particularly preferably form a divalent ion.

The lithium-transition metal composite oxide preferably contains Ni at greater than or equal to 30 mol% relative to the total molar amount of metal elements excluding Li. Ni is contained at the highest content among the metal elements constituting the lithium-transition metal composite oxide excluding Li. The content of Ni is more preferably greater than or equal to 50 mol%, and particularly preferably greater than or equal to 70 mol% relative to the total molar amount of the metal elements excluding Li. An upper limit value of the Ni content may be 95 mol%, but is preferably 90 mol%. A preferable example of the Ni content is greater than or equal to 50 mol% and less than or equal to 90 mol%, or greater than or equal to 70 mol% and less than or equal to 90 mol% relative to the total molar amount of the metal elements excluding Li. The Ni content within the above range facilitates attempting to higher capacity with achieving the good durability.

The lithium-transition metal composite oxide preferably contains Al. Although increasing a content of Ni destabilizes the structure with charge and discharge, containing Al stabilizes the crystal structure of the composite oxide, and may inhibit deterioration of the durability. The content of Al is preferably less than or equal to 10 mol%, and more preferably less than or equal to 5 mol% relative to the total molar amount of the metal elements excluding Li. A preferable example of the Al content is greater than or equal to 1 mol% and less than or equal to 10 mol%, or greater than or equal to 1 mol% and less than or equal to 5 mol% relative to the total molar amount of the metal elements excluding Li. The Al content within the above range facilitates attempting to higher capacity with achieving the good durability.

The lithium-transition metal composite oxide may contain at least one of Mn and Fe. When Mn or Fe is contained, each content thereof is preferably greater than or equal to 1 mol% and less than or equal to 60 mol%, and more preferably greater than or equal to 10 mol% and less than or equal to 50 mol% relative to the total molar amount of the metal elements excluding Li. The lithium-transition metal composite oxide may contain Co, but a content thereof is, for example, less than or equal to 10 mol%, and more preferably less than or equal to 5 mol% relative to the total molar amount of the metal elements excluding Li, or substantially 0% because Co is an expensive metal element.

An example of preferable lithium-transition metal composite oxides is a composite oxide represented by the composition formula LiₐNiₓM_{y}Al_{z}C₂, wherein 0.9 ≤ α ≤ 1.2, 0.70 ≤ x ≤ 0.90, 0.01 ≤ y ≤ 0.3, 0 ≤ z ≤ 0.10, and M represents at least one metal element selected from the group consisting of cobalt, manganese, and iron.

A Li-site occupancy in the first composite oxide particle 31 is preferably greater than or equal to 80%, more preferably greater than or equal to 90%, and particularly preferably greater than or equal to 95%. The Li-site occupancy within the above range easily achieves higher capacity. The Li-site occupancy means a proportion of Li in Li sites in the crystal structure, and is determined by Rietveld analysis of an X-ray diffraction pattern of the lithium-transition metal composite oxide. The Li-site occupancy may be greater than or equal to 98% in the lithium-transition metal composite oxide including no manganese, may be greater than or equal to 94% in the lithium-transition metal composite oxide including manganese, or may be substantially 100%.

### [Proportion of Metal Elements Excluding Li in Li layer of Lithium-Transition Metal Composite Oxide]

A proportion of metal elements excluding Li present in a Li layer is determined by Rietveld analysis of an X-ray diffraction pattern obtained by X-ray diffraction measurement on the lithium-transition metal composite oxide. The X-ray diffraction pattern is obtained by a powder X-ray diffraction method by using a powder X-ray diffraction apparatus (product name "RINT-TTR", manufactured by Rigaku Corporation, radiation source Cu-Kα) under the following conditions.
Measuring Range: 15-120°
Scanning Rate: 4°/min
Analyzing Range: 30-120°
Background: B-spline
Profile Function: Split pseudo-Voigt function
Restricting Condition: Li(3a) + Ni(3a) = 1
   Ni(3a) + Ni(3b) = β (β represents each Ni content proportion)
ICSD No.: 98-009-4814

For the Rietveld analysis of the X-ray diffraction pattern, PDXL2 (manufactured by Rigaku Corporation), which is a software for Rietveld analysis, is used.

Many of the first single particles 31 and second single particles 32 are angular particles. A cross section of the particle of each single particle has a polygonal shape including sides having a length of greater than or equal to 1.5 µm, and at least three interior angles θ of the polygon is greater than or equal to 45° and less than or equal to 160°, for example. A length of the longest long side is, for example, greater than or equal to 3 µm and less than or equal to 20 µm, and preferably greater than or equal to 3 µm and less than or equal to 15 µm. All the interior angles θ of the polygon may be greater than or equal to 45° and less than or equal to 160°, greater than or equal to 60° and less than or equal to 150°, or greater than or equal to 70° and less than or equal to 130°, and there may be greater than or equal to three of internal angles θ of less than or equal to 90°. The positive electrode active material 30 includes, for example, the angular particles satisfying the length of the long side and the internal angles θ at greater than or equal to 50% on a number basis.

An average porosity of the first single particle 31 and the second single particle 32 is preferably less than or equal to 1%, and more preferably less than or equal to 0.3%. The average porosity means an average value of proportions of pores in each single particle, and is measured by a method described later. Each single particle, which is a dense particle having few pores, may have an average porosity of less than 1%.

The average porosity of the first single particle 31 and the second single particle 32 is measured by the following method.
(1) A cross section of the positive electrode mixture layer 11A is exposed by using an ion-milling apparatus (for example, IM4000PLUS, manufactured by Hitachi High-Tech Corporation).
(2) A backscattered electron image of the exposed cross section of the positive electrode mixture layer 11A is photographed by using a scanning electron microscope (SEM). The magnification with photographing the backscattered electron image is greater than or equal to 1000 and less than or equal to 10000.
(3) The SEM image of the cross section of the positive electrode mixture layer 11A is imported into a computer, and color-coded into two colors with contrast by using an image analysis software. The color with lower contrast is specified as the void.
(4) Void areas of 100 particles randomly selected from the processed image are determined, and a proportion of the void area in a sectional area of the particle (porosity) is calculated and averaged.

The first single particles 31 are large particles having a particle diameter of greater than or equal to 4 µm, as note above. The second single particles 32 are particles having a particle diameter of less than 4 µm. The particle diameter of the single particle herein means a diameter of a circumscribed circle of a particle in a sectional SEM image of a cross section of the positive electrode mixture layer 11A. The positive electrode active material 30 may have a particle size distribution having a peak in particle diameter regions of greater than or equal to 4 µm and in a particle diameter region of less than 4 µm, for example. An average particle diameter of the first single particles 31 is preferably greater than or equal to 5 µm and less than or equal to 20 µm, and more preferably greater than or equal to 6 µm and less than or equal to 15 µm. An average particle diameter of the second single particles 32 is preferably greater than or equal to 0.5 µm and less than or equal to 3.5 µm, and more preferably greater than or equal to 1 µm and less than or equal to 3 µm. The average particle diameter may be calculated by averaging particle diameters of 100 random particles in a SEM image, but when the particle size distribution of each type of single particles may be measured, D50 may be substituted therefor.

In the positive electrode mixture layer 11A, the second single particles 32 are disposed around the first single particle 31. That is, the first single particle 31 is surrounded by a plurality of the second single particles 32, and the first single particles 31 are hardly contacted with each other. In the positive electrode mixture layer 11A, greater than or equal to 80% and less than or equal to 100% of the first single particles 31 are disposed so as not to be contacted with other first single particles 31, and the second single particles 32 are interposed between the first single particles 31. The second single particles 32 may be directly contacted with the first single particle 31, but a binder and a conductive agent are preferably present between the first single particle 31 and the second single particles 32.

A particle 32X having a smallest particle diameter among the second single particles 32 adjacent to the first single particle 31 has a particle diameter of less than or equal to 1/5 of a particle diameter of the adjacent first single particle 31. That is, a difference in a particle diameter between the adjacent first single particle 31 and the second single particles 32 is greater than or equal to five-fold. The plurality of the second single particles 32 is present around the first single particle 31, and at least one of, preferably a plurality of, the second single particles 32 having a particle diameter of less than or equal to 1/5 of a particle diameter of the first single particle 31 is present. The number of the second single particles 32 surrounding the first single particle 31 is, for example, greater than or equal to 5 and less than or equal to 30, and preferably greater than or equal to 8 and less than or equal to 20.

An average value of the proportions of the particle diameters of the particles 32X to the particle diameters of the first single particles 31 is preferably less than or equal to 1/5 and greater than or equal to 1/30, and more preferably less than or equal to 1/8 and greater than or equal to 1/20. That is, an average value of the difference in the particle diameter between the adjacent first single particle 31 and the particle 32X is preferably greater than or equal to 5-fold and less than or equal to 30-fold, and more preferably greater than or equal to 8-fold and less than or equal to 20-fold. It is considered that the positive electrode 11 comprising the positive electrode mixture layer 11A including such first single particles 31 and second single particles 32 having the large difference in the particle diameter and in which the plurality of the second single particles 32 is disposed around the first single particle 31 reduces polarization of the first single particle 31 being a large single particle to improve the durability of the non-aqueous electrolyte secondary battery 10.

The positive electrode mixture layer 11A includes the positive electrode active material as a main component, and a total content of the binder and the conductive agent is preferably greater than or equal to 0.5 mass% and less than or equal to 5.0 mass%, and more preferably greater than or equal to 0.8 mass% and less than or equal to 4.0 mass% relative to a mass of the positive electrode mixture layer. The positive electrode 11 may be produced by applying a positive electrode mixture slurry including the positive electrode active material, the binder, the conductive agent, and the like on surfaces of the positive electrode core, and drying and subsequently compressing the coating to form the positive electrode mixture layers on both the surfaces of the positive electrode core. It is considered that increasing the amount of the added binder and conductive agent increases a viscosity of the slurry to facilitate aggregation of the second single particles 32 being small particles around the first single particle 31 being a large particle.

The first single particle 31 and the second single particle 32 may be synthesized by: mixing a transition metal compound containing at least Ni, an aluminum compound, and a lithium compound; firing the mixture at high temperature; and then further firing the mixture at low temperature, for example. The first firing is performed at a temperature higher than a firing temperature of a conventionally common positive electrode active material by greater than or equal to 100°C and less than or equal to 150°C. The second firing is performed at a temperature lower than the temperature of the first firing by greater than or equal to 100°C and less than or equal to 150°C, that is, at the firing temperature of the conventionally common positive electrode active material. As an example of specific firing temperatures, the temperature of the first firing is preferably greater than or equal to 720°C and less than or equal to 1000°C, the temperature of the second firing is preferably greater than or equal to 600°C and less than or equal to 800°C, and there is preferably a difference of greater than or equal to 50°C of the temperature between each of the firing steps.

Although the first single particles 31 and the second single particles 32 may be manufactured by separately synthesizing and mixing the particles, they may be simultaneously synthesized by using abnormal growth of particles, for example. Setting a high temperature for a shorter time tends to increase the particle diameter of the single particle. On the other hand, the first single particles 31 and the second single particles 32 may be manufactured by regulating a particle diameter, firing temperature, heating rate, and specific surface area of a composite oxide being a raw material to allow both large single particles and small particles to be present in one aggregated particle, and disintegrating this particle. A so-called person skilled in the art may produce the positive electrode mixture layer 11A comprising the above constitution based on the description herein with a purpose of synthesizing the positive electrode active material 30 including the first single particles 31 and the second single particles 32 and disposing the second single particles 32 around the first single particle 31.

### [Negative Electrode]

The negative electrode 12 has a negative electrode core and a negative electrode mixture layer provided on a surface of the negative electrode core. The negative electrode core is a sheet-shaped current collector having higher conductivity than the negative electrode mixture layer. For the negative electrode core, a foil of a metal stable within a potential range of the negative electrode 12, such as copper and a copper alloy, a film in which such a metal is disposed on a surface layer thereof, and the like may be used. The negative electrode mixture layer includes a negative electrode active material and a binder, and is preferably provided on both surfaces of the negative electrode core. A thickness of the negative electrode mixture layer is larger than that of the negative electrode core, and an example thereof is greater than or equal to 50 µm and less than or equal to 150 µm on one side of the core.

The negative electrode mixture layer includes the negative electrode active material as a main component. A content of the negative electrode active material is preferably greater than or equal to 90 mass% relative to a mass of the negative electrode mixture layer, and as a preferable example, greater than or equal to 90 mass% and less than or equal to 98 mass%. A content of the binder is, for example, greater than or equal to 0.5 mass% and less than or equal to 5 mass% relative to the mass of the negative electrode mixture layer. The negative electrode 12 may be produced by, for example, applying a negative electrode mixture slurry including the negative electrode active material, the binder, and the like on surfaces of the negative electrode core, and drying and subsequently compressing the coating to form the negative electrode mixture layers on both the surfaces of the negative electrode core.

The negative electrode mixture layer typically includes a carbon-based active material that reversibly absorbs and desorbs lithium ions as the negative electrode active material. A preferable carbon-based active material is a graphite such as: a natural graphite such as flake graphite, massive graphite, or amorphous graphite; or an artificial graphite such as massive artificial graphite (MAG) or graphitized mesophase-carbon microbead (MCMB). As the negative electrode active material, a Si-based active material composed of at least one of Si and a Si-containing compound may be used, or the carbon-based active material and the Si-based active material may be used in combination.

As the binder included in the negative electrode mixture layer, a fluororesin, PAN, a polyimide, an acrylic resin, a polyolefin, or the like may be used as in the case of the positive electrode 11, but styrene-butadiene rubber (SBR) is preferably used. The negative electrode mixture layer preferably further includes cellulose derivatives such as CMC or a salt thereof, polyacrylic acid (PAA) or a salt thereof, polyvinyl alcohol (PVA), or the like. The negative electrode mixture layer may include a conductive agent. As the conductive agent, conductive agents same as those applied for the positive electrode 11 may be used.

### [Separator]

For the separator 13, a porous sheet having an ion permeation property and an insulation property is used. Specific examples of the porous sheet include a fine porous thin film, a woven fabric, and a nonwoven fabric. As a material for the separator 13, a polyolefin such as polyethylene, polypropylene, or a copolymer of ethylene and an α-olefin, cellulose, or the like is preferable. The separator 13 may have any of a single-layered structure and a multi-layered structure. On a surface of the separator 13, a heat-resistant layer including inorganic particles, a heat-resistant layer composed of a highly heat-resistant resin such as an aramid resin, a polyimide, or a polyamide imide, or the like may be formed.

### EXAMPLES

Hereinafter, the present disclosure will be further described with Examples, but the present disclosure is not limited to these Examples.

### <Example 1>

### [Synthesis of Positive Electrode Active Material]

Lithium hydroxide and nickel-cobalt-aluminum composite oxide were mixed at a predetermined mass ratio, the mixture was heated from 650°C to 780°C for 0.5 hours and then fired at 780°C for 30 hours, and then further fired at 700°C for 30 hours. Thereafter, the fired product was crushed and subjected to a classification treatment to obtain a lithium-transition metal composite oxide (positive electrode active material) represented by the composite formula LiNi_{0.9}Co_{0.45}Al_{0.45}O₂. A Li-site occupancy in this lithium-transition metal composite oxide was 98.5%, and the a-axial lattice constant was 2.87536 Å.

### [Production of Positive Electrode A1]

A content of the first single particles was 14% relative to all particles of the positive electrode active material. The positive electrode active material, acetylene black, and polyvinylidene fluoride were mixed at a solid-content mass ratio of 100:2:1.3, and N-methyl-2-pyrrolidone (NMP) was used as a dispersion medium to prepare a positive electrode mixture slurry. Then, the positive electrode mixture slurry was applied on a positive electrode core composed of aluminum foil, the coating was dried and compressed, and then cut to a predetermined electrode size to obtain a positive electrode A1.

FIG. 3 shows a sectional SEM image of the mixture layer of the positive electrode A1. It was confirmed from this image that second single particles were disposed around a first single particle having a particle diameter of greater than or equal to 4 µm and that a particle diameter of the smallest particle among the second single particles was less than or equal to 1/5 of a particle diameter of the adjacent first single particle. The second single particles having a particle diameter of less than or equal to 1/5 of the particle diameter of the first single particle were confirmed around substantially all the first single particles.

### <Comparative Example 1>

### [Production of Positive Electrode B1]

Lithium hydroxide and nickel-cobalt-aluminum composite oxide (D50 = 7 µm) were mixed at a predetermined mass ratio, the mixture was fired at 720°C for 30 hours, and then further fired at 700°C for 30 hours. Thereafter, the fired product was crushed and subjected to a classification treatment to produce a positive electrode B1 as a lithium-transition metal composite oxide represented by the composition formula LiNi_{0.91}Co_{0.45}Al_{0.45}O₂. A Li-site occupancy in this lithium-transition metal composite oxide was 99.5%, and the a-axial lattice constant was 2.87313 Å. The positive electrode B1 had a uniform particle diameter of the positive electrode active material, and in a sectional SEM image of the positive electrode mixture layer, a proportion of the first single particles was 1.5%.

### <Comparative Example 2>

### [Production of Positive Electrode B2]

Lithium hydroxide and nickel-cobalt-aluminum composite oxide (D50 = 5 µm) were mixed at a predetermined mass ratio, the mixture was fired at 720°C for 30 hours, and then further fired at 700°C for 30 hours. Thereafter, the fired product was crushed and subjected to a classification treatment to produce a positive electrode B1 as a lithium-transition metal composite oxide represented by the composition formula LiNi_{0.91}Co_{0.04}Al_{0.05}O₂. A Li-site occupancy in this lithium-transition metal composite oxide was 99.3%, and the a-axial lattice constant was 2.87272 Å. The positive electrode B1 had a uniform particle diameter of the positive electrode active material, and a sectional SEM image of the positive electrode mixture layer did not include the first single particle.

### [Production of Negative Electrode]

Low-BET graphite, a dispersion of styrene-butadiene rubber (SBR), and sodium carboxymethylcellulose (CMC-Na) were mixed at a predetermined solid-content mass ratio, and water was used as a dispersion medium to prepare a negative electrode mixture slurry. Then, this negative electrode mixture slurry was applied on both surfaces of a negative electrode core composed of copper foil, the coating was dried and compressed, and then cut to a predetermined electrode size to produce a negative electrode in which negative electrode mixture layers were formed on both the surfaces of the negative electrode core. The low-BET graphite was of graphite particles having a volume of pores having a pore diameter of less than or equal to 2 nm per mass of less than or equal to 0.3 mm³/g, which was determined from a nitrogen-adsorption isothermal curve with a DFT method. The low-BET graphite had a specific surface area with a BET method of less than or equal to 1.5 m²/g.

### [Preparation of Non-Aqueous Electrolyte Liquid]

Ethylene carbonate (EC), ethyl methyl carbonate (EMC), and dimethyl carbonate (DMC) were mixed at a predetermined volume ratio. Into this mixed solvent, LiPF₆ was added to obtain a non-aqueous electrolyte liquid.

### [Production of Non-Aqueous Electrolyte Secondary Battery]

Non-aqueous electrolyte secondary batteries for evaluation were produced by using the positive electrodes A1, B1, and B2. The above positive electrode to which a positive electrode lead made of aluminum was attached, and the above negative electrode to which a negative electrode lead made of nickel was attached were spirally wound with a separator made of polyethylene interposed therebetween, and flatly formed to produce a wound electrode assembly. This electrode assembly was housed in an exterior composed of an aluminum laminate, the above non-aqueous electrolyte liquid was injected, and then an opening of the exterior was sealed to produce a non-aqueous electrolyte secondary battery for evaluation.

### [Evaluation of Capacity Retention (Durability)]

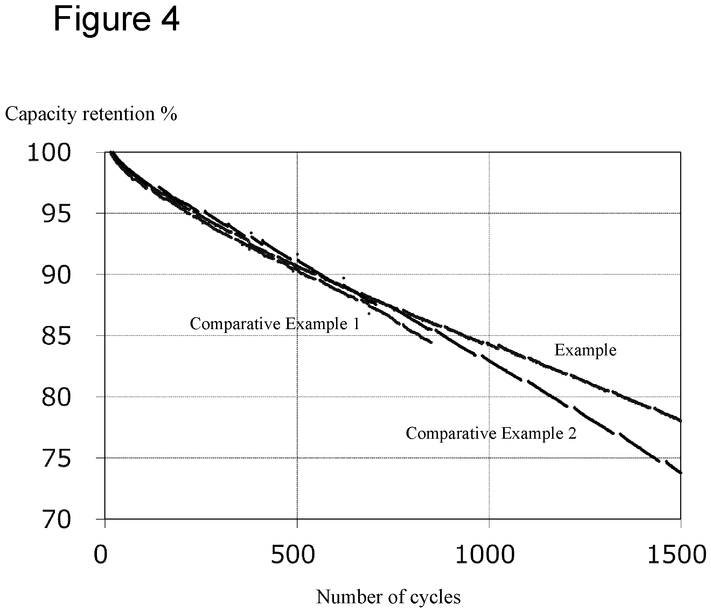

Each battery produced was charged and discharged as follows with 800 or 1500 cycles (only 800 cycles for the battery produced with B1) to calculate a capacity retention according to the following formula. Table 1 shows the evaluation results. FIG. 4 shows changes in the capacity retentions until the 1500th cycle (800th cycle for the battery produced with B1). Capacity retention = (Discharge capacity after 800, 1500th cycle / Initial discharge capacity) × 100

Charge-discharge condition: Under a temperature environment of 45°C, the battery was charged at a constant current of 0.5 C until a battery voltage of 4.2 V, additionally charged at 4.2 V until 0.02 C, then rested for 30 minutes, and discharged at a constant capacity of 0.5 E until the battery voltage of 2.5 V.

**[Table 1]**

| | Presence or absence of a particle adjacent to a first single particle and having a particle diameter of less than or equal to 1/5 | Content of first single particles | Capacity retention (800cycle) | Capacity retention (1500cycle) |
|---|---|---|---|---|
| A1 | Presence | 14% | 87% | 78% |
| B1 | Presence | 2% | 85% | - |
| B2 | Absence | 0% | 86% | 73% |

As shown in Table 1 and FIG. 4, the battery of Example, which uses the positive electrode A1, has a higher capacity retention and a better durability (cycle characteristics) compared with the batteries of Comparative Examples, which use the positive electrodes B1 and B2.

### REFERENCE SIGNS LIST

10 non-aqueous electrolyte secondary battery, 11 positive electrode, 11A positive electrode mixture layer, 12 negative electrode, 13 separator, 14 electrode assembly, 16 exterior housing can, 17 sealing assembly, 18, 19 insulating plate, 20 positive electrode lead, 21 negative electrode lead, 22 grooved portion, 23 internal terminal plate, 24 lower vent member, 25 insulating member, 26 upper vent member, 27 cap, 28 gasket, 30 positive electrode active material, 31 first single particle, 32 second single particle

## Claims

1. A positive electrode for a non-aqueous electrolyte secondary battery, comprising:
a positive electrode core; and
a positive electrode mixture layer provided on the positive electrode core and including a positive electrode active material, wherein
the positive electrode active material is composed of single particles,
the single particles include: first single particles having a particle diameter of greater than or equal to 4 µm; and second single particles having a smaller particle diameter than the first single particles,
in the positive electrode mixture layer, the second single particles are disposed around the first single particle, and a particle having a smallest particle diameter among the second single particles adjacent to the first single particle has a particle diameter of less than or equal to 1/5 of a particle diameter of the adjacent first single particle, and
a content of the first single particles is greater than or equal to 3% and less than or equal to 30% relative to a total number of particles of the positive electrode active material.

2. The positive electrode for a non-aqueous electrolyte secondary battery according to claim 1, wherein the single particles are composed of a lithium-transition metal composite oxide containing at least one metal element in an amount of greater than or equal to 90 mol% relative to a total molar amount of metal elements excluding Li, the at least one metal element selected from the group consisting of Ni, Mn, Fe, and Al.

3. A non-aqueous electrolyte secondary battery, comprising:
the positive electrode according to claim 1 or 2;
a negative electrode; and
a non-aqueous electrolyte.
